# EUROPÄISCHE PATENTSCHRIFT

(11) **EP 3 715 674 B1**
(45) Veröffentlichungstag und Bekanntmachung des Hinweises auf die Patenterteilung: **08.03.2023**
(21) Anmeldenummer: 19465518.9
(22) Anmeldetag: 29.03.2019
(51) Int. Cl.: F16H 55/17, F16H 55/06

(54) **ZAHNRAD UND VERFAHREN ZU DESSEN HERSTELLUNG**
COGGED WHEEL AND METHOD OF MANUFACTURING SAME
ROUE DENTÉE ET SON PROCÉDÉ DE FABRICATION

(43) Veröffentlichungstag der Anmeldung: 30.09.2020
(73) Patentinhaber: Vitesco Technologies GmbH, 93055 Regensburg (DE)
(72) Erfinder: Plaeru, George, 300620 Timisoara (RO); Pop, Daniel-Marius, 437315 Suciu de Sus (RO); Parsan, Vlad, 300737 Timisoara (RO); Radu, Lucretiu Marius, 300317 Timisoara (RO)
(74) Vertreter: Vitesco Technologies

(56) Entgegenhaltungen:
- WO-A1-2012/026296
- DE-A1-102011 122 138
- JP-A- S55 135 265
- KR-A- 20130 090 551
- US-A- 4 722 722

## Beschreibung

Die vorliegende Erfindung betrifft ein Zahnrad mit den Merkmalen des Oberbegriffes von Patentanspruch 1 und ein Verfahren zur Herstellung des Zahnrades mit den Merkmale des Patentanspruchs 4.

Derartige Zahnräder sind bekannt. Sie besitzen in ihrem Inneren einen Metalleinsatz zur Stabilisierung, der mit Kunststoff überformt ist. Der zum Halten einer Rückholfeder vorgesehene Haken bildet dabei einen Teil des überformten Kunststoffkorpus.

Hierbei besteht die Gefahr, dass bei einer starken Feder der zum Halten bzw. Fixieren derselben vorgesehene Haken abbrechen kann. Von Hause aus muss daher ein ausreichend stabiler Haken vorgesehen sein, um ein Abbrechen zu verhindern. Hierdurch werden die Materialkosten bei der Herstellung des Zahnrades erhöht.

Darüber hinaus besteht die Schwierigkeit, dass in manchen Fällen der Haken nicht einwandfrei vom Spritzwerkzeug für die Herstellung des Kunststoffkorpus extrahiert werden kann. Hierzu werden manchmal zusätzliche Gleitelemente benötigt, die zu einer weiteren Erhöhung der Herstellkosten führen. Auch kann der Haken im Betrieb entsprechend verformt werden, wenn er zu schwach ausgebildet ist.

Ferner ist aus der JP 55 135265 A ein Zahnrad bekannt, das einen Kunststoffkorpus aufweist, in dessen Innerem zur Stabilisierung ein Metalleinsatz angeordnet ist. Der Metalleinsatz weist dabei mehrere Haken an seinem radialen Ende auf, die zur Verbesserung der Verbindung des Metalleinsatzes mit dem Kunststoffkorpus dienen. Der Kunststoffkorpus bildet hierbei den Zahnteil des Zahnrades und umhüllt den äußeren Umfangsteil des Metalleinsatzes.

Die US 4 722 722 A beschreibt ein Zahnrad, das zur Verstärkung einen Metalleinsatz aufweist, welcher an seinem radialen Ende hakenförmig umgebogen ist, wobei der gebildete Haken zur Verbesserung der Verbindung mit einem radial äußeren Kunststoffkorpus dient, welcher die Zähne des Zahnrades bildet.

Die KR 2013 0090551 A beschreibt ein Zahnrad eines Aktuators, das mit einer Rückholfeder versehen ist.

Die Druckschrift WO 2012/026 296 A1 offenbart ein Schneckengetriebe und eine elektrische Lenkkraftunterstützung. Dieses Dokument zeigt ein Zahnrad, eine Kunstoffkorpus und auch einen Arm mit Haken.

Der vorliegenden Erfindung liegt die Aufgabe zugrunde, ein Zahnrad der vorstehend genannten Art zu schaffen, das sich durch eine besonders hohe Stabilität auszeichnet.

Diese Aufgabe wird erfindungsgemäß bei einem Zahnrad der angegebenen Art durch das kennzeichnende Merkmal von Patentansprüche 1 und 4 gelöst.

Die erfindungsgemäße Lösung sieht vor, dass der Haken zum Halten der Rückholfeder nicht nur aus Kunststoff ausgebildet ist, sondern von einem Teil des Metalleinsatzes gebildet ist, der ebenfalls mit Kunststoff überformt ist. Der Haken wird somit von einem Teil des ohnehin vorhandenen Metalleinsatzes gebildet. Hierdurch wird die Stabilität bzw. Steifigkeit des Zahnrades erhöht. Zusätzliche Teile sind nicht erforderlich, sondern es muss lediglich der Metalleinsatz so ausgebildet werden, dass der Haken einen Teil hiervon bildet. Probleme beim Extrahieren aus dem Spritzwerkzeug sind nicht vorhanden.

Das erfindungsgemäß ausgebildete Zahnrad weist daher auch bei der erfindungsgemäßen Lösung lediglich zwei Teile auf, nämlich den Metalleinsatz mit integriertem Haken und den überformten Kunststoffkorpus. Dadurch, dass der Haken durch den Metalleinsatz stabilisiert ist, wird eine entsprechende Ersparnis an Kunststoffmaterial erzielt. Insgesamt ergibt sich daher eine Reihe von Vorteilen:
Das gesamte Zahnrad erhält eine größere Festigkeit, es können stärkere Rückholfedern eingesetzt werden, das Entformen wird erleichtert, es wird eine erhöhte Lebensdauer des Zahnrades erzielt und das Teil lässt sich kostengünstiger herstellen, da insbesondere eine Ersparnis an Kunststoffmaterial erreicht wird.

Was die Form des verwendeten Metalleinsatzes anbetrifft, so weist dieser eine scheibenförmige Basis auf, von der aus sich radial ein den Haken bildender Arm erstreckt. Ein derartiger Metalleinsatz kann auf einfache Weise durch Stanzen aus einem geeigneten Metallblech hergestellt werden.

In Weiterbildung der Erfindung ist der Metalleinsatz mit einer Welle verbunden, die vom Zahnrad umgeben ist. Der Metalleinsatz erfüllt daher hierbei zwei Zwecke: Zum einen stabilisiert er den Kunststoffkorpus des Zahnrades und zum anderen bildet er die Befestigung einer zugehörigen Zahnradwelle, die beispielsweise mit ihrem Ende an der Basis des Metalleinsatzes fixiert ist. Dies kann beispielsweise durch einen geeigneten Schweißvorgang erfolgen. Insbesondere weist hierbei die scheibenförmige Basis des Metalleinsatzes eine zentrale Öffnung auf, in der die entsprechende Welle angeordnet ist.

Erfindungsgemäß erstreckt sich der Arm ausgehend von der scheibenförmigen Basis in deren Ebene und dann senkrecht zur Basis, wobei der Arm an seinem Ende mit dem Haken versehen ist. Der Arm ist rechtwinklig umgebogen, so dass der Haken am Ende des parallel zur Zahnradachse verlaufenden Armabschnittes angeordnet ist.

Der Metalleinsatz kann ferner mit einer Welle verbunden werden, die das Zahnrad trägt. Hierbei kann beispielsweise die Welle in das fertig überformte Zahnrad eingesetzt und dann mit dem Metalleinsatz verbunden werden. Bei einer anderen Ausführungsform wird die Welle mit dem Metalleinsatz verbunden, wonach ein entsprechender Überformungsprozess zur Ausbildung des Zahnrades stattfindet. Der Verbindungsvorgang zwischen Metalleinsatz und Welle kann beispielsweise durch Schweißen, insbesondere Laserschweißen, erfolgen.

Was die Anbringung der Rückholfeder anbetrifft, so kann diese nach dem Überformen des Metalleinsatzes mit dem Haken verhakt werden. Speziell kann die Rückholfeder nach dem Verbinden des Metalleinsatzes mit der Welle mit dem Haken verhakt werden.

Das hier beschriebene Zahnrad kann beispielsweise Teil einer Aktuatoreinheit sein.

Die Erfindung wird nachfolgend anhand eines Ausführungsbeispieles in Verbindung mit der Zeichnung im Einzelnen erläutert. Es zeigen:
- Figur 1: eine Draufsicht, Seitenansicht und Vorderansicht, die letztere als nicht repräsentatives Ausführungsbeispiel der Erfindung, eines Metalleinsatzes;

- Figur 2: einen ersten Vertikalschnitt durch ein mit einer Rückholfeder versehenes Zahnrad; und
- Figur 3: einen zweiten Vertikalschnitt durch das in den Figuren 1 und 2 dargestellte Zahnrad.

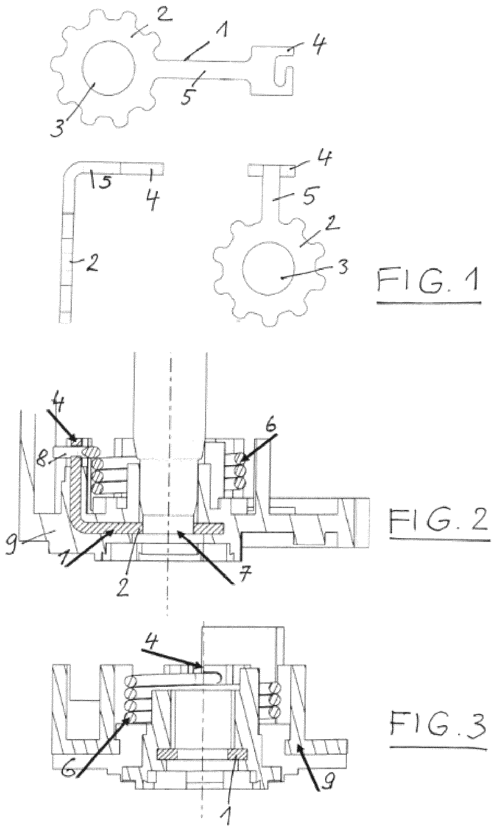

Figur 1 zeigt einen Metalleinsatz 1 in drei Ansichten, der zur Herstellung eines Zahnrades 9 mit Kunststoff überformt wird. Die spezielle Form des Zahnrades 9 spielt dabei für die Erfindung nur eine untergeordnete Rolle, so dass auf Einzelheiten der Ausbildung des Zahnrades hier nicht eingegangen wird.

Der Metalleinsatz 1 dient zur Stabilisierung des Zahnrades und zur Befestigung einer Welle 7 am Zahnrad. Er wird in einem ersten Verfahrensabschnitt aus einem geeigneten Metallblech gestanzt und hat die in der oberen Draufsicht von Figur 1 gezeigte Form. Er besitzt einen scheibenförmigen Basisabschnitt 2, dessen Außenumfang abwechselnd mit Vorsprüngen und Eintiefungen versehen ist. In der Mitte des Basisabschnittes 2 befindet sich eine Öffnung 3. Vom Basisabschnitt 2 aus erstreckt sich ein Arm 5, der in einen als Haken 4 ausgebildeten Endabschnitt mündet.

In einem weiteren Verfahrensabschnitt wird der Arm 5 des Metalleinsatzes 1 rechtwinklig zur Ebene des Basisabschnittes 2 abgebogen, so dass der Metalleinsatz die in den weiteren Darstellungen von Figur 1 gezeigten Formen erhält.

Figur 2 zeigt den Metalleinsatz 1 im eingebauten Zustand. Er wird mit einer Welle 7 beispielsweise durch Laserschweißen verbunden, die in die Öffnung 3 des Basisabschnitts 2 des Metalleinsatzes 1 hineinragt. Der Arm 5 des Metalleinsatzes besitzt in seinem Endabschnitt den in Figur 1 dargestellten Haken 4, der somit einen Teil des Metalleinsatzes 1 bildet. Der Einsatz 1 mit Arm 5 und Haken 4 wird dann mit Hilfe einer geeigneten Spritzgießform mit Kunststoff zur Ausbildung eines Zahnrades 9 überformt. Es kann dann eine Rückholfeder 6 an einem Endabschnitt 8 mit dem Haken 4 des mit Kunststoff überformten Armes 5 des Metalleinsatzes 1 verbunden werden.

Figur 2 zeigt das Zahnrad 9 mit einer Welle 7, die mit dem Metalleinsatz 1 verschweißt ist. Ferner ist die Rückholfeder 6 dargestellt, die mit dem Haken 4 des mit Kunststoff überformten Metalleinsatzes 1 verhakt ist.

Figur 3 zeigt einen weiteren Vertikalschnitt durch das Zahnrad der Figur 2. Man erkennt, dass der Haken 4 zum Halten der Rückholfeder 6 einen Teil des Metalleinsatzes 1 bildet, so dass der Haken 4 eine größere Stabilität erhält und durch die Kraft der Rückholfeder 6 nicht verformt wird. Der zur Stabilisierung des Kunststoffkorpus des Zahnrades und zur Fixierung der Welle 7 am Zahnrad 9 dienende Metalleinsatz 1 wird somit gleichzeitig zur Stabilisierung des Hakens 4 verwendet.

## Patentansprüche

1. Zahnrad (9) umfassend einen Kunststoffkorpus, in dessen Innerem zur Stabilisierung ein Metalleinsatz (1) angeordnet ist, wobei der Kunststoffkorpus einen Haken (4) zum Halten einer Rückholfeder (6) aufweist, der von einem mit Kunststoff überformten Teil des Metalleinsatzes (1) gebildet ist, wobei der Metalleinsatz (1) eine scheibenförmige Basis (2) aufweist, von der aus sich radial ein den Haken (4) bildender Arm (5) erstreckt, **dadurch gekennzeichnet dass** sich der Arm (5) ausgehend von der scheibenförmigen Basis (2) in deren Ebene und dann senkrecht zur Basis (2) erstreckt, dass der Arm (5) an seinem Ende mit dem Haken (4) versehen ist, und dass der Arm rechtwinklig umgebogen ist, so dass der Haken am Ende des parallel zur Zahnradachse verlaufenden Armabschnittes angeordnet ist.

2. Kombination des Zahnrades nach Anspruch 1 mit einer Welle (7), **dadurch gekennzeichnet, dass** der Metalleinsatz (1) mit der Welle (7) verbunden ist, die vom Zahnrad (9) umgeben ist.

3. kombination nach Anspruch 2, **dadurch gekennzeichnet, dass** die scheibenförmige Basis (2) des Metalleinsatzes (1) eine zentrale Öffnung (3) aufweist, in der die Welle (7) angeordnet ist.

4. Verfahren zur Herstellung eines Zahnrades nach Anspruch 1 **dadurch gekennzeichnet, dass** der den Haken (4) aufweisender Metalleinsatz (1) aus einem Metallblech gestanzt und dann zur Ausbildung des Zahnrades (9) mit Kunststoff überformt wird, dass der Metalleinsatz ausgestanzt wird und eine scheibenförmige Basis (2) aufweist, von der sich radial ein den Haken (4) tragender Arm (5) erstreckt,
und dass der den Haken (4) aufweisende Arm (5) bis zum Endabschnitt parallel zur Zahnradachse umgebogen wird.

5. Verfahren zur Herstellung einer Kombination nach Anspruch 2 oder 3, **gekennzeichnet durch** das Verfahren zur Herstellung eines Zahnrades nach Anspruch 4, wobei der Metalleinsatz (1) mit der Welle (7) verbunden wird.

6. Verfahren nach Anspruch 5 **dadurch gekennzeichnet, dass** die Rückholfeder (6) nach dem Überformen des Metalleinsatzes (1) mit dem Haken (4) verhakt wird.

7. Verfahren nach Anspruch 6 **dadurch gekennzeichnet, dass** die Rückholfeder (6) nach dem Verbinden des Metalleinsatzes (1) mit der Welle (7) mit dem Haken (4) verhakt wird.

## Claims

1. Toothed wheel (9) comprising a plastics body, in the interior of which there is arranged a metal insert (1) for stabilization purposes, wherein the plastics body has a hook (4) for holding a retraction spring (6), which is formed by a part of the metal insert (1) which is overmoulded with plastic, wherein the metal insert (1) has a disc-like base (2) from which an arm (5) which forms the hook (4) extends radially, **characterized in that** the arm (5) extends, proceeding from the disc-like base (2), in the plane of the latter and then perpendicular to the base (2), **in that** the arm (5) is equipped, at its end, with the hook (4), and **in that** the arm is bent at right angles, such that the hook is arranged at the end of that arm portion which runs parallel to the toothed-wheel axis.

2. Combination of the toothed wheel according to Claim 1 with a shaft (7), **characterized in that** the metal insert (1) is connected to the shaft (7), which is surrounded by the toothed wheel (9).

3. Combination according to Claim 2, **characterized in that** the disc-like base (2) of the metal insert (1) has a central opening (3) in which the shaft (7) is arranged.

4. Method for producing a toothed wheel according to Claim 1, **characterized in that** the metal insert (1) which has the hook (4) is punched out of a metal sheet and then is overmoulded with plastic in order to form the toothed wheel (9), **in that** the metal insert is punched out and has a disc-like base (2) from which an arm (5) which bears the hook (4) extends radially, and **in that** the arm (5) which has the hook (4) is bent up to an end portion parallel to the toothed-wheel axis.

5. Method for producing a combination according to Claim 2 or 3, **characterized by** the method for producing a toothed wheel according to Claim 4, wherein the metal insert (1) is connected to the shaft (7).

6. Method according to Claim 5, **characterized in that** the retraction spring (6) is hooked together with the hook (4) after the overmoulding of the metal insert (1).

7. Method according to Claim 6, **characterized in that** the retraction spring (6) is hooked together with the hook (4) after the connection of the metal insert (1) to the shaft (7).

## Revendications

1. Roue dentée (9) comprenant un corps en matière plastique, à l'intérieur duquel est agencé un insert métallique (1) pour la stabilisation, le corps en matière plastique présentant un crochet (4) pour le maintien d'un ressort de rappel (6), qui est formé par une partie surmoulée de matière plastique de l'insert métallique (1), l'insert métallique (1) présentant une base en forme de disque (2) à partir de laquelle s'étend radialement un bras (5) formant le crochet (4),
**caractérisée en ce que**
le bras (5) s'étend à partir de la base en forme de disque (2) dans le plan de celle-ci et ensuite perpendiculairement à la base (2), **en ce que** le bras (5) est muni du crochet (4)à son extrémité, et **en ce que** le bras est replié à angle droit de telle sorte que le crochet est agencé à l'extrémité de la section de bras qui est parallèle à l'axe de la roue dentée.

2. Combinaison de la roue dentée selon la revendication 1 avec un arbre (7), **caractérisée en ce que** l'insert métallique (1) est relié à l'arbre (7) qui est entouré par la roue dentée (9).

3. Combinaison selon la revendication 2, **caractérisée en ce que** la base en forme de disque (2) de l'insert métallique (1) présente une ouverture centrale (3) dans laquelle est agencé l'arbre (7).

4. Procédé de fabrication d'une roue dentée selon la revendication 1, **caractérisé en ce que** l'insert métallique (1) présentant le crochet (4) est découpé dans une tôle métallique et ensuite surmoulé avec de la matière plastique pour former la roue dentée (9), **en ce que** l'insert métallique est découpé et présente une base en forme de disque (2), à partir de laquelle un bras (5) portant le crochet (4) s'étend radialement, et **en ce que** le bras (5) présentant le crochet (4) est replié jusqu'à la section d'extrémité parallèlement à l'axe de la roue dentée.

5. Procédé de fabrication d'une combinaison selon la revendication 2 ou 3, **caractérisé par** le procédé de fabrication d'une roue dentée selon la revendication 4, dans lequel l'insert métallique (1) est relié à l'arbre (7) .

6. Procédé selon la revendication 5, **caractérisé en ce que** le ressort de rappel (6) est accroché au crochet (4) après le surmoulage de l'insert métallique (1).

7. Procédé selon la revendication 6, **caractérisé en ce que** le ressort de rappel (6) est accroché au crochet (4) après la liaison de l'insert métallique (1) à l'arbre (7) .
